# EUROPÄISCHE PATENTANMELDUNG

(11) **EP 2 434 164 A1**
(43) Veröffentlichungstag der Anmeldung: **28.03.2012**
(21) Anmeldenummer: 10179371.9
(22) Anmeldetag: 24.09.2010
(51) Int. Cl.: F04D 27/02, F04D 29/16, F04D 29/52, F04D 29/56, F01D 11/08

(54) **Verstellbares Casing Treatment**

(71) Anmelder: SIEMENS AKTIENGESELLSCHAFT, 80333 München (DE)
(72) Erfinder: Butzeck, Christopher, 45481, Mülheim (DE); Cornelius, Christian, 45549, Sprockhövel (DE); Feng, Tieshan, 45130, Essen (DE); Lohse, Uwe, 42899, Remscheid (DE); Mertens, Dirk, 40215, Düsseldorf (DE); Saathoff, Horst, 47441, Moers (DE); Stapper, Martin, 47475, Kamp-Lintfort (DE)

(57) **Zusammenfassung**

Die Erfindung betrifft ein Verfahren zum Betreiben eines Verdichters (5) mit einem ringförmigen Strömungskanal (22), welcher sich konzentrisch entlang einer Maschinenachse (2) des Verdichters (5) erstreckt und radial außen von einer Kanalwand (20) begrenzt ist, wobei in der Kanalwand (20) Strömungspassagen (32) zur Beeinflussung der Spaltströmung zwischen Laufschaufeln (15) und der Kanalwand (20) vorgesehen sind. Um einen Verdichters mit erweitertem Betriebsbereich anzugeben und bei dem die aerodynamischen Verluste im Betrieb trotz Vorhandensein eines Casing Treatments vergleichsweise gering sind, wird vorgeschlagen, dass in Abhängigkeit des Betriebszustands des Verdichters (5) zumindest eines der Abmaße zumindest einer der Strömungspassagen (32) und/oder die Größe der Öffnung zumindest einer der Strömungspassagen (32) verändert wird.

## Beschreibung

Die Erfindung betrifft ein Verfahren zum Betrieb eines Verdichters mit einem ringförmigen Strömungskanal, welcher sich konzentrisch entlang einer Maschinenachse des Verdichters erstreckt und radial außen von einer Kanalwand begrenzt ist, wobei in der Kanalwand Strömungspassagen zur Beeinflussung der Spaltströmung zwischen Laufschaufeln und der Kanalwand vorgesehen sind.

Gasturbinen und deren Funktionsweisen sind allgemein bekannt. Die von einem Verdichter der Gasturbine angesaugte Luft wird in diesem komprimiert und danach in einem Brenner mit Kraftstoff vermischt. Nachfolgend verbrennt das in eine Brennkammer einströmende Gemisch zu einem Heißgas, welches anschließend eine der Brennkammer nachgeschaltete Turbine durchströmt und währenddessen aufgrund seiner Entspannung den Rotor der Gasturbine in Rotation versetzt. Durch die Rotation des Rotors wird neben dem Verdichter auch ein am Rotor angekoppelter Generator angetrieben, der die bereitgestellte mechanische Energie in elektrische Energie umwandelt. Auch werden Gasturbinen als Flugzeugtriebwerke eingesetzt.

Sowohl der Verdichter als auch die Turbine setzen sich jeweils aus mehreren nacheinander geschalteten Stufen zusammen, die jeweils zwei aufeinander folgende Kränze von Schaufeln umfassen. Eine Turbinenstufe setzt sich aus einem von drehfesten Leitschaufeln gebildeten Leitschaufelkranz und einem davon stromab angeordneten Laufschaufelkranz zusammen, wogegen eine Verdichterstufe sich aus einem Laufschaufelkranz und einem davon stromab angeordneten Leitschaufelkranz zusammensetzt; jeweils in Strömungsrichtung des Mediums betrachtet. Bei einer einwelligen Gasturbine sind die Laufschaufeln des Verdichters und der Turbine an einem gemeinsamen Rotor fest montiert.

Die seriell angeordneten, d.h. axial aufeinander folgenden Verdichterstufen fördern aufgrund der mit dem Rotor umlaufenden Laufschaufeln die angesaugte Luft vom Eingang des Verdichters in Richtung des Verdichterausgangs, wobei die Luft innerhalb jeder Stufe (oder jedes Kranzes) einen inkrementalen Druckanstieg erfährt. Der gesamte Druckanstieg über dem Verdichter ist die Summe aller inkrementalen Druckanstiege über jede Stufe (oder allen Kränzen).

In bekannter Weise kann es beim Betrieb des Verdichters, insbesondere bei dem Betrieb des Verdichters einer Gasturbine, vorkommen, dass bei Annäherung an die Stabilitätsgrenze sich durch Fehlanströmung und anwachsende Spaltwirbel die Rezirkulation vergrößert. Hierdurch kann innerhalb des Verdichters ein Strömungsabriss an einem oder mehreren Schaufelblättern auftreten, d.h. die Strömungsgeschwindigkeit der Luft in Hauptströmungsrichtung geht bei einem Teil einer Verdichterstufe auf einen kleinen Betrag oder auf Null zurück. Gleichzeitig reicht die vom Rotor an die Luft übertragene Energie nicht aus, diese durch die Verdichterstufe zu fördern und das erforderliche Druckverhältnis der betreffenden Verdichterstufe herzustellen. Das Druckverhältnis ist die über die betreffende Stufe des Verdichters auftretende Druckerhöhung, bezogen auf den Eingangsdruck der jeweiligen Stufe. Wird dem Strömungsabriss nicht unverzüglich entgegen gewirkt, kann sein Fortschreiten zu einer rotierenden Ablösung (rotating stall) und ggf. sogar dazu führen, dass die gesamte Luftströmung durch den Verdichter ihre Richtung umkehrt, was als Verdichter-Pumpen bekannt ist. Dieser besonders kritische Betriebszustand gefährdet die Beschaufelung und verhindert eine ausreichende Versorgung des Brennraums mit Verdichterluft, so dass ein gestörter Betrieb der Gasturbine diagnostiziert und die Maschine umgehend abgeschaltet werden muss. Folglich sind die vorgenannten Strömungsphänomene unerwünscht und müssen nach Möglichkeit während des Betriebs sicher vermieden werden.

Zur Bekämpfung der vorgenannten Probleme ist aus der EP 0 719 907 A1 eine strukturierte, also mit Strömungspassagen versehene äußere Begrenzungswand bekannt, welche den Spitzen der Laufschaufeln gegenüberliegt. Diese Strukturierung der Begrenzungswand, das so genannte "Casing Treatment", dient zur positiven Beeinflussung der spaltnahen Strömung für diejenigen Situationen, in denen ein Strömungsabriss an einem Schaufelblatt droht. Aufgrund der Strukturierung werden während des gesamten Betriebs dem Hauptstrom im Gebiet niedriger Strömungsgeschwindigkeiten Teilströme entnommen und anschließend stromauf der Entnahmeposition wieder zugeführt. Die auf der Druckseite der Verdichterschaufel im Spitzenbereich entnommene Luft wird dem saugseitigen Hauptstrom der betreffenden Verdichterschaufel zur Verhinderung eines möglicherweise dort auftretenden Strömungsabrisses zugeführt. Die die Teilströme führenden Kanäle des Casing Treatments sind dementsprechend derart gegenüber der Maschinenachse- bzw. Drehachse geneigt, dass - in Drehrichtung des Rotors betrachtet - die Entnahmeposition nach der Einspeiseposition, an der der ausgekoppelte Teilstrom dem spaltnahen Hauptstrom zurückgeführt wird, liegt. Dies ist erforderlich, damit aufgrund des Staffelungswinkels der zur Drehrichtung schräg gestellten Spitzen der Schaufelblätter der Teilstrom über die Schaufelblattspitze hinweg von der Druckseite zu der Saugseite geführt werden kann. Somit ist die Längserstreckung des Rückstromkanals im Wesentlichen quer zur Geraden des schaufelspitzseitigen Staffelungswinkels, d.h. annähernd parallel zur Maschinenachse ausgerichtet.

Eine ähnliche Vorrichtung ist aus der EP 1 286 022 A1 bekannt.

Die vorgenannten Ausgestaltungen weisen allerdings den Nachteil auf, dass die Strömungsführung der Teilströme nicht für jeden Betriebszustand des Verdichters optimal ist.

Des Weiteren offenbart die FR 2 325 830 ein Verdichtergehäuse mit darin eingebrachten Nuten. Auch durch diese Nuten soll ein Strömungsabriss der Grenzströmung und somit das Pumpen des Verdichters verhindert werden, wobei jedoch der sich durch die Nuten einstellende Strom nicht entgegen der Hauptströmung fließt, sondern mit dieser.

Aufgabe der Erfindung ist die Bereitstellung eines Verfahrens zum Betrieb eines Verdichters, mit dem der Betriebsbereich des Verdichters erweitert wird und bei dem die aerodynamischen Verluste im Betrieb trotz Vorhandensein eines Casing Treatments vergleichsweise gering sind.

Die Lösung der Aufgabe gelingt mit einem Verfahren zum Betrieb eines Verdichters gemäß den Merkmalen des Anspruchs 1. Vorteilhafte Ausgestaltungen sind jeweils Gegenstand der Unteransprüche 2 bis 6.

Das erfindungsgemäße Verfahren sieht für einen Verdichter mit einem ringförmigen Strömungskanal, welcher sich konzentrisch entlang einer Maschinenachse des Verdichters erstreckt und radial außen von einer Kanalwand begrenzt ist, wobei in der Kanalwand Strömungspassagen zur Beeinflussung der Spaltströmung zwischen Laufschaufeln und der Kanalwand vorgesehen sind, vor, dass in Abhängigkeit des Betriebszustands des Verdichters zumindest eines der Abmaße zumindest einer der Strömungspassagen und/oder die Größe der Öffnungen zumindest einer der Strömungspassagen verändert wird.

Die Erfindung erkennt, dass die in der Kanalwand vorhandenen Strömungspassagen prinzipiell nur dann vorteilhaft sind, wenn der Verdichter vergleichsweise nahe an der Stabilitätsgrenze betrieben wird. Sofern der Abstand zur Stabilitätsgrenze ausreichend groß ist, wirkt sich das statische "Casing Treatment" eher negativ aus. Dieses verursacht dann Störströmungen, die in diesem Betriebszustand den Wirkungsgrad des Verdichters eher verringern.

Die Erfindung schlägt somit vor, die Strömungspassagen in der Kanalwand nur in denjenigen Betriebszuständen zu aktivieren, in denen es erforderlich ist. Für alle anderen Betriebszustände des Verdichters sollen die Strömungspassagen keinerlei aerodynamische Wirkung hervorrufen. Um dies zu erreichen, ist gemäß einer ersten erfindungsgemäßen Ausgestaltung zumindest eines der Abmaße zumindest einer der Strömungspassagen veränderbar. Mit anderen Worten: gemäß der ersten Ausgestaltung sind das Volumen und/oder die Kontur der Strömungspassagen veränderbar. Gemäß einer zweiten erfindungsgemäßen Ausgestaltung sind die Strömungspassagen verschließbar ausgestaltet. Dazu ist ein Mittel zur Änderung der Größe der Öffnung zumindest einer der Strömungspassagen, vorzugsweise aller Strömungspassagen, vorgesehen.

Dadurch wird es insgesamt möglich, die Kontur der Kanalwand in denjenigen Abschnitten, in denen die Strömungspassagen vorgesehen sind, an den Betriebszustand des Verdichters dynamisch anzupassen.

Für den Fall, dass der Verdichter sich der Stabilitätsgrenze d.h. der Pumpgrenze annähert, können so die Strömungspassagenöffnungen vergrößert, ggf. sogar vollständig geöffnet werden, oder es werden deren Abmaße vergrößert. Folglich werden erst dann die Strömungspassagen aktiviert, d.h. mit dem Strömungskanal des Verdichters strömungstechnisch verbunden, wenn damit zu rechnen ist, dass die eingangs genannten ungewünschten Phänomene auftreten. Dies verbessert zum einen die Wirkungsweise des Verdichters mit Casing Treatment, zum anderen vergrößert sich der Arbeitsbereich desjenigen Verdichters, welcher bisher nicht mit einem Casing Treatment ausgestattet war. Abgesehen davon ist es sogar möglich, das erfindungsgemäße Casing Treatment stets so anzupassen, dass es die unterschiedlichen Phänomene bzw. Strömungsinstabilitäten individuell dämpfen oder sogar unterdrücken kann.

Gleichzeitig lassen sich die bisher auftretenden Nachteile des Casing Treatments unterdrücken, welche nämlich dann eintraten, wenn der mit einem konventionellen Casing Treatment ausgestattete Verdichter nahe oder im Auslegungspunkt betrieben wurde. Da nun im derartigen Betriebszustand die Strömungspassagen verschlossen sind, tritt auch deren schädlicher Einfluss auf die Aerodynamik in Nennbetrieb nicht mehr auf. Dies verbessert den Wirkungsgrad des Verdichters, verglichen mit einem Verdichter mit einem konventionellen Casing Treatment.

Folglich kann neben einer Wirkungsgradverbesserung des Verdichters auch eine Erweiterung des Betriebsbereiches des Verdichters erzielt werden, da im Betrieb nahe des Auslegungspunkts die die Aerodynamik störenden Einflüsse der Strömungspassagen vermieden werden und sie erst im erforderlichen (im der Stabilitätsgrenze angenäherten) Betriebszustand aktiviert werden. Es lassen sich, unabhängig von den allgemeinen strömungsmechanischen Bedingungen, die optimale Kontur beziehungsweise die optimalen Abmessungen der Strömungspassagen einstellen.

Zweckmäßigerweise ist das Verändern der Abmaße der Strömungspassagen oder das Öffnen und Schließen der Strömungspassagen stufenlos möglich.

Gemäß einer ersten vorteilhaften Weiterbildung des Verfahrens wird anhand zumindest eines im Strömungskanal oder stromab davon angeordneten Drucksensors ein Verdichterdruck erfasst, aus dem der Betriebszustand ermittelt wird. Falls erforderlich, kann auch aus dem Verdichterdruck eine Größe abgeleitet werden, aus der dann der Betriebszustand ermittelt wird. Aus dem Verdichterdruck bzw. aus der abgeleiteten Größe lässt sich ggf. auch der Abstand zur Stabilitätsgrenze ermitteln, so dass mithilfe dieser Informationen ein geschlossener Regelkreis gebildet werden kann, der die den Wirkungsgrad mindernden Phänomene in ihrer Entstehung verhindert oder in ihrer Ausprägung reduziert. Der Abstand zur Pumpgrenze kann beispielsweise auch unter Berücksichtigung der Leistung, der Umgebungstemperatur, des Massenstroms, der Verdichtereinlassschaufelstellung oder anderer Prozess-Parameter bestimmt werden.

Bevorzugtermaßen erfolgen die Abmaße-Änderungen und/oder die Änderungen der Öffnungsgröße periodisch. Mit anderen Worten: Bei im an der Stabilitätsgrenze angenähertem Betrieb werden die Abmaße nicht fest eingestellt, sondern schwingen um einen Sollwert. Dies hat den besonderen Vorteil, dass im Betrieb die drohenden Verdichterinstabilitäten durch externe Anregung der Hauptströmung nicht nur passiv, sondern auch aktiv beeinflusst und ggf. sogar hinausgezögert werden können.

Gemäß einer besonders bevorzugten ersten Ausgestaltung der Strömungspassagen sind die betreffenden Strömungspassagen als die Kanalwand durchdringende Löcher mit beispielsweise rechteckigem, parallelogrammförmigem oder ringsegmentförmigem Querschnitt ausgestaltet, in denen jeweils ein entsprechend konturiertes Stopfenelement zur Veränderung der Tiefe der betreffenden Strömungspassage verschiebbar angeordnet ist. Mithilfe dieser ersten Ausgestaltung der Strömungspassagen ist eine besonders einfache Konstruktion angegeben, bei der als veränderliches Abmaß die Tiefe der Strömungspassagen veränderbar ist. Die Tiefe der Strömungspassage kann mithilfe des Stopfenelements auch zu Null gesetzt werden, so dass die betreffende Strömungspassage vollständig verschlossen bzw. nicht mehr vorhanden ist. Diese Betriebsposition des Stopfenelements ist für den Nenn-Betrieb und daran angrenzende Betriebszustände des Verdichters bevorzugt. Nach Verlassen des Nenn-Betriebs kann das Stopfenelement aus dem Loch heraus bewegt werden, so dass zuerst eine Strömungspassage mit geringer Tiefe entsteht, die dann mit zunehmender Verschiebung des Stopfenelements nach außen zunimmt. Dies ist dann bis Erreichen einer Maximaltiefe der Strömungspassagen möglich. Die maximale Tiefe wird vorzugsweise jedoch erst dann erreicht, wenn der Abstand zur Stabilitätsgrenze des Verdichters den minimal zulässigen Wert erreicht hat. Folglich kann die Strukturierung an den Betrieb des Verdichters dynamisch angepasst werden, um Strömungsverluste insgesamt niedrig zu halten.

Nach vorteilhafter Weiterbildung der ersten Ausgestaltung der Strömungspassagen ist das Stopfenelement als Stempel mit einem Kragen ausgebildet, welcher Stempel von radial außen in das Loch der Kanalwand eingesetzt ist. Durch die Verwendung des Kragens wird die maximale Eindringtiefe des Stopfenelements in das betreffende Loch begrenzt, so dass ein Hineinragen des Stopfenelements in den Strömungskanal sicher vermieden werden kann. Dies verhindert das Anstreifen und Beschädigen der an den Löchern des Strömungskanals vorbeilaufenden Verdichterlaufschaufeln am Stopfenelement.

Vorzugsweise ist das Stopfenelement mithilfe eines Federelements vorgespannt. Dadurch befindet sich das Stopfenelement in einer ersten Endlage, aus der es mit einem Antrieb in andere Positionen unter Erhöhung der Federvorspannung verschoben werden kann. Die Rückstellung des Stopfenelements erfolgt dann stets durch die Federkraft des Federelements, was insbesondere beim Ausfall des Antriebs wünschenswert ist.

Gemäß einer zweiten Ausgestaltung der Strömungspassagen sind die betreffenden Strömungspassagen nicht als Löcher mit variablem Stopfenelement, sondern als sacklochartige Nuten ausgebildet, deren Nutöffnung mittels einer in Umfangsrichtung verschiebbaren Abdeckung, welche ebenfalls Öffnungen aufweist, freilegbar oder verschließbar sind. Die Kontur der Öffnungen der Abdeckung und deren Abstand untereinander entsprechen dabei der Nutöffnungskontur und dem Abstand zwischen den Nuten. Durch Verschieben der Abdeckung können deren Öffnungen mit den Nutöffnungen gar nicht, teilweise oder vollständig in Überdeckung gebracht werden. Mit dieser Ausgestaltung ist eine vergleichsweise einfache Konstruktion angegeben, um die aerodynamische Wirkung des in der Kanalwand stets vorgesehenen Casing Treatments zu beeinflussen und gegebenenfalls nahezu vollständig auszuschalten. Selbstverständlich kann diese Ausgestaltung auch ergänzend zur Stopfenelement-Lösung verwendet werden. In der Kanalwand sind dann die Nuten durch Löcher ersetzt.

Vorzugsweise ist eine zur Energieerzeugung vorgesehene stationäre Gasturbine mit einem Verdichter vorgenannter Ausgestaltung ausgestattet. Selbstverständlich kann auch ein Flugtriebwerk mit einem derartigen Verdichter ausgestaltet sein.

Einen besonderen Vorteil bietet die erste Ausgestaltung der Strömungspassagen. Wenn die Stopfenelemente individuell ansteuerbar sind, können diese für beliebige Zeitpunkte auch unterschiedlich positioniert werden. Dadurch ist es auch möglich, dass entlang des Umfangs angeordnete Strömungspassagen unterschiedliche Größenänderung der Löcherabmaße aufweisen. Zur externen Anregung der Hauptströmung sind folgende Betriebsmodi des erfindungsgemäßen Verfahrens beispielsweise möglich:
- Synchrone Betätigung der Stopfenelemente: Alle Stopfenelemente der in einem axialen Abschnitt angeordneten Strömungspassagen schwingen rotationssymmetrisch, wobei die Frequenz und die Amplitude der Schwingung vorgebbar und ggf. sogar variabel sein kann. Vorzugsweise wird dabei diejenige Schwingungsfrequenz gewählt, die zur Frequenz der Strömung im axialen Abschnitt identisch ist, um das mögliche Auftreten der Phänomene sicher zu unterdrücken.
- Positionsabhängige Betätigung der Stopfenelemente: Die Stopfenelemente der in einem axialen Abschnitt angeordneten Strömungspassagen schwingen in Abhängigkeit von ihrer Umfangsposition versetzt zueinander, um zum Beispiel einer rotierenden Ablösung entgegenzuwirken, wobei vorzugsweise die Schwingungsfrequenz der Stopfenelemente dann der Ablösefrequenz entspricht.
- Überlagerungsmodus: Verschiedene Schwingungen können überlagert sein, zum Beispiel eine kleine Amplitude bei hoher Frequenz in Kombination mit einer hohen Amplitude bei geringer Frequenz.
- Individualmodus: Die Stopfenelemente schwingen vollkommen individuell voneinander. Dies ist insbesondere dann von Vorteil, wenn ein lokales Strömungsphänomen auftritt.

Die periodisch schwingenden Stopfenelemente, die auch als Resonatoren bezeichnet werden können, wirken dann stets aktiv auf die Hauptströmung des Verdichters ein und können damit Strömungsinstabilitäten besonders effizient entgegenwirken beziehungsweise besonders effizient dämpfen. Insbesondere dadurch kann eine weitere Vergrößerung des Arbeitsbereichs des Verdichters erreicht werden.

Insgesamt wird mit Erfindung vorgeschlagen, das Casing Treatment adaptiv und dynamisch einstellbar auszugestalten, wobei die Strömungspassagen in einem ersten Schritt variabel einstellbar sind und in einem zweiten Schritt die Hauptströmung sogar aktiv anregen bzw. manipulieren können.

Gemäß einer ersten vorteilhaften Weiterbildung des Verdichters können die betreffenden Strömungspassagen entlang des Umfangs der Kanalwand gleichmäßig verteilt sein. Vorzugsweise sind die betreffenden Strömungspassagen lediglich in einem Sektor oder in mehreren Sektoren des Umfangs angeordnet. Die Einschränkung auf einen Sektor oder mehrere Sektoren ist möglich, da zur Störung einer den Betrieb des Verdichters einschränkenden Ablöseerscheinung oder eines Rotating Stall es ausreichen kann, das Phänomen lokal zu stören. Damit kann ein konstruktiv einfacher und preiswerter Verdichter angegeben werden. Selbstverständlich ist die Anwendung von entlang des gesamten Umfangs gleichmäßig verteilten Strömungspassagen nicht ausgeschlossen.

Gemäß einer weiteren vorteilhaften Ausgestaltung des Verdichters sind an mehreren axialen Abschnitten des Strömungskanals betreffende Strömungspassagen vorgesehen. Da der erfindungsgemäße Verdichter, der zumeist als Axialverdichter ausgebildet ist, mehrere Verdichterstufen aufweist, können an unterschiedlichen Verdichterstufen entsprechende Störungen auftreten, so dass es von Vorteil ist an den üblicherweise betroffenen Verdichterstufen die betreffenden Strömungspassagen anzuordnen, um das Entstehen und Ausbreiten der störenden Phänomene frühzeitig und vor Ort unterbinden zu können. Zweckmäßigerweise liegen die betreffenden Strömungspassagen zumindest teilweise den Schaufelspitzen von Laufschaufeln eines Laufschaufelkranzes des Verdichters gegenüber. Damit können Sie am effizientesten die Spaltströmung zwischen den Spitzen der Schaufelblätter der Laufschaufeln und der Kanalwand beeinflussen.

Die Strömungspassagen sind dreidimensional ausgestaltet und weisen dementsprechend drei Abmaße auf: Länge (in Axialrichtung des Verdichters), Breite (in Umfangsrichtung) und Tiefe (in Radialrichtung). In der einfachsten Ausgestaltung ist die Strömungspassage quaderförmig oder prismaförmig, beides parallel zur Maschinenachse oder mit gegenüber der Maschinenachse geneigter Orientierung. Anstelle der geradlinigen Erstreckung in jeder Erstreckungsrichtung kann die Kontur auch gebogen ausgestaltet sein. Auch können in jeder Erstreckungsrichtung Stufen oder Kanten vorgesehen sein. Selbstverständlich können auch unterschiedliche Konturen - geradlinig und gebogen - in einer Erstreckungsrichtung kombiniert sein. Des Weiteren können die Strömungspassagen auch gegenüber der radialen Richtung geneigt sein.

Die vorangegangenen und andere Merkmale sowie weitere Vorteile der vorliegenden Erfindung werden aus der folgenden Beschreibung von Ausführungsformen deutlicher. Es zeigen schematisch:
- FIG 1: eine Gasturbine in einem Längsteilschnitt,
- FIG 2: einen Querschnitt durch den Verdichter der Gasturbine mit einer in der Kanalwand angeordneten dynamischen Strukturierung gemäß einer ersten Ausgestaltung,
- FIG 3: gemäß einer ersten Ausgestaltung die Kanalwand mit einer einstellbaren Strömungspassage durch ein in einer ersten Endlage befindliches Stopfenelement,
- FIG 4: die Kanalwand nach FIG 3 mit dem in einer zweiten Endlage befindlichen Stopfenelement,
- FIG 5: das aus den FIG 3 und FIG 4 bekannte Stopfenelement in einer perspektivischen Darstellung,
- FIG 6: zwei Ausschnitte aus einem Längsschnitt durch den Verdichter mit einer in der Kanalwand angeordneten Strömungspassage gemäß einer zweiten Ausgestaltung,
- FIG 7: eine perspektivische Darstellung einer mit Öffnungen versehenen Abdeckung für die Strömungspassagen gemäß der zweiten Ausgestaltung,
- FIG 8: eine Darstellung von möglichen Konturen der Öffnungen der Strömungspassagen,
- FIG 9, 10: einen Ausschnitt aus einem Längsschnitt durch den Verdichter mit einer in der Kanalwand angeordneten Strömungspassage gemäß einer dritten Ausgestaltung und
- FIG 11-14: jeweils einen Ausschnitt aus einem Längsschnitt durch den Verdichter mit einer in der Kanalwand angeordneten Strömungspassage zu unterschiedlichen Zeitpunkten.

In allen Figuren sind identische Bauteile mit identischen Bezugszeichen versehen.

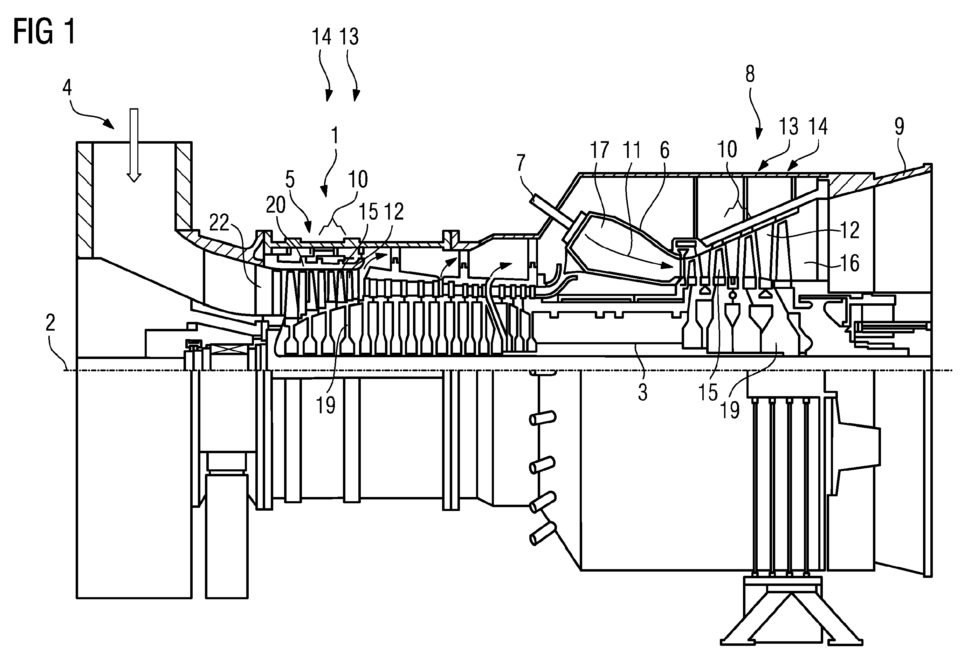

FIG 1 zeigt eine Konstruktionsvariante einer Gasturbine 1 in einem Längsteilschnitt. Sie weist im Inneren einen um eine Maschinenachse 2 drehgelagerten Rotor 3 auf, der auch als Turbinenläufer bezeichnet wird. Entlang des Rotors 3 folgen aufeinander ein Ansauggehäuse 4, ein Verdichter 5, eine torusartige Ringbrennkammer 6 mit mehreren rotationssymmetrisch zueinander angeordneten Brennern 7, eine Turbineneinheit 8 und ein Abgasgehäuse 9. Die Ringbrennkammer 6 umgibt einen Verbrennungsraum 17, der mit einem ringförmigen Heißgaskanal 16 verbunden ist. Dort bilden vier hintereinander geschaltete Schaufelstufen 10 die Turbineneinheit 8. Jede Schaufelstufe 10 ist aus zwei Schaufelringen gebildet. In Strömungsrichtung eines in der Ringbrennkammer 6 erzeugten Heißgases 11 gesehen, folgt im Heißgaskanal 16 jeweils einer Leitschaufelreihe 13 eine aus Laufschaufeln 15 gebildete Reihe 14. Die Leitschaufeln 12 sind am Stator befestigt, wohingegen die Laufschaufeln 15 einer Reihe 14 jeweils mittels einer Scheibe 19 am Rotor 3 angebracht sind. An dem Rotor 3 ist ein Generator oder eine Arbeitsmaschine (nicht dargestellt) angekoppelt.

Auch im Verdichter 5 sind mehrere Schaufelstufen 10 kaskadierend angeordnet, wobei jede Schaufelstufe 10 aus einer Laufschaufelreihe 14 und einer davon stromab angeordneten Leitschaufelreihe 13 gebildet ist. Wie in der Turbineneinheit 8 sind auch im Verdichter 5 die Laufschaufeln 15 an einer Scheibe 19 des Rotors 3 befestigt. Die Spitzen der Laufschaufeln 15 liegen spaltbildend einer Kanalwand 20 gegenüber, welche konzentrisch zur Maschinenachse 2 der Gasturbine 1 angeordnet ist. Die nach innen gewandte Fläche der Kanalwand 20 begrenzt den sich in Axialrichtung erstreckenden Strömungskanal 22 des Verdichters 5 radial außen. Die Kanalwand 20 kann dabei entweder als Leitschaufelträger oder als Gehäuse ausgebildet sein.

In der nach innen gewandten Fläche der Kanalwand 20 sind in FIG 1 nicht weiter dargestellte Strukturen eingebracht, die zumindest teilweise den Spitzen der Laufschaufeln 15 gegenüber liegen und prinzipiell als Casing Treatment bekannt sind. Die erfindungsgemäße Ausgestaltung dieser Strukturen und deren Wirkungsweise sind in den nachfolgenden Figuren detailliert beschrieben.

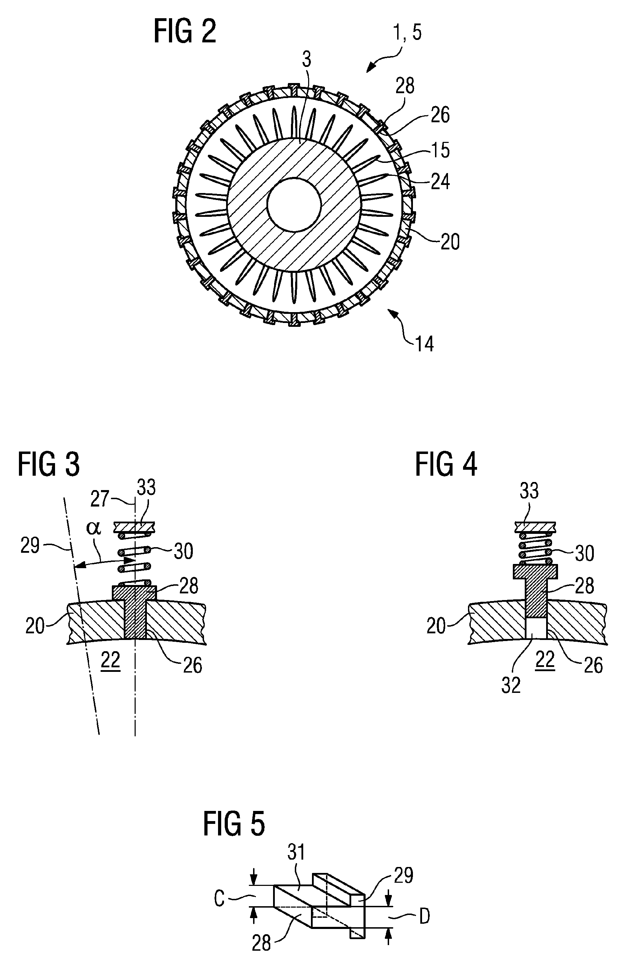

FIG 2 - FIG 5 zeigen eine erste Ausgestaltung zur Veränderung des Abmaßes einer Strömungspassage.

FIG 2 zeigt den Querschnitt durch den Verdichter 5 der Gasturbine 1 im axialen Abschnitt von Laufschaufeln 15, welche am Rotor 3 in einem Kranz angeordnet sind. Den Spitzen 24 der Laufschaufeln 15 liegt die ringförmige Kanalwand 20 unter Abstand gegenüber. In einem Sektor der ringförmigen Kanalwand 20 ist entlang des Umfangs eine Vielzahl von Löchern 26 gezeigt, in denen jeweils ein radial verschiebliches Stopfenelement 28 sitzt. Anstelle der sektormäßigen Anordnung der Löcher 26 mit den darin sitzenden Stopfenelementen 28 ist es auch möglich, diese gleichmäßig entlang des Umfangs verteilt anzuordnen. In diesem Fall entspricht die Anzahl der Löcher 26 dann der Anzahl der Laufschaufeln 15 im Laufschaufelkranz oder einem Vielfachem davon. Es ist auch möglich, dass in zwei oder mehr Sektoren des Umfangs die Löcher 26 samt Stopfenelemente 28 vorgesehen sind. Nicht dargestellt in FIG 2 ist ein die Kanalwand 20 umgreifendes Gehäuse.

FIG 3 und FIG 4 zeigen den Querschnitt eines Abschnitts der Kanalwand 20 mit nur einem der Löcher 26 und dem darin angeordneten Stopfenelement 28 im Detail. Das Loch 26 hat in der gezeigten Ausführungsform eine rechteckige Kontur. Dementsprechend umfasst das in FIG 5 perspektivisch dargestellte Stopfenelement 28 neben einem Kragen 29 ein Füllelement 31 zum Verschließen des Lochs 26.

FIG 3 zeigt das Stopfenelement 28 in einer ersten Position. In dieser ersten Position verschließt das Stopfenelement 28 das Loch 26 vollständig. Dadurch weist die innere Fläche der Kanalwand 20 einen stufenlosen und kantenfreien Verlauf entlang des Umfangs im Bereich des Lochs 26 auf. Es existiert somit an dieser Stelle keine Strukturierung, die die Strömung zwischen den Spitzen 24 der Laufschaufeln 15 unter der Kanalwand 20 beeinflusst.

Durch die Verschiebung des Stopfenelements 28 nach außen, was in FIG 4 dargestellt ist, wird ein Teil des Lochs 26 freigelegt. Die Tiefe des Lochs 26 ist dabei abhängig von der Länge des Verschiebewegs des Stopfenelements 28. Der dadurch geschaffene Freiraum im Loch 26 ist dann eine Strömungspassage 32, die als Casing Treatment die Spaltströmung zwischen Schaufelblattspitze 24 und Kanalwand 20 beeinflusst.

Die Verschiebung des Stopfenelements 28 nach außen erfolgte dabei durch einen nicht weiter dargestellten Antrieb. Der Antrieb kann beispielsweise elektrisch, pneumatisch oder hydraulisch ausgebildet sein. Andere Antriebsarten, beispielsweise piezoelektrische Antriebe sind auch möglich. Zur Rückverstellung des Stopfenelements 28 ist eine Schraubenfeder 30 vorgesehen, die sich an einem die Kanalwand 20 ebenfalls ringförmig umgreifenden Gehäuse 33 des Verdichters 5 abstützt. Ebenfalls denkbar sind Spiral- oder Tellerfedern sowie auch eine Rückverstellung, die nur mithilfe einer der beschriebenen Antriebsarten erfolgt.

Die in FIG 2, FIG 3 und FIG 4 gezeigten Löcher 26 erstrecken sich entlang der Radialrichtung 27. Dies ist nicht jedoch zwingend erforderlich. Die Löcher 26 können auch gegenüber der Radialrichtung 27 um einen festen, beliebigen Winkel α (FIG 3) geneigt ausgerichtet sein, was durch eine Loch-Mittellinie 29 angedeutet ist. Dementsprechend sind die Stopfenelemente 28 auch entlang der Loch-Mittellinie 29 verschieblich ausgestaltet.

In einer nicht dargestellten Ausführungsform können die über den Umfang oder in Segmenten verteilten Strömungspassagen 32 auch in Gruppen von Strömungspassagen 32 eingeteilt sein. Innerhalb einer Gruppe sind die Löcher 26 parallel zueinander ausgerichtet, wobei die Ausrichtung der Löcher zweier unterschiedlicher Gruppen zueinander geneigt sind. Sofern die unterschiedliche Ausrichtung erforderlich ist, vereinfacht die gruppenweise Anordnung die Herstellung der Löcher. Dies senkt die Herstellungskosten.

In FIG 5 ist das aus den FIG 3 und FIG 4 bekannte Stopfenelement 28 perspektivisch dargestellt. Gezeigt ist eine massive Ausführungsform des Stopfenelements 28, wodurch dieses aufgrund seiner Masse eher träge auf dynamische Strömungseinflusse reagiert. Die Abmaße C und D sind gemäß des zeigten Stopfenelements 28 identisch. Alternativ dazu ist es auch möglich, dass die Abmaße C und D unterschiedlich groß sind.

Die in FIG 2 - FIG 5 gezeigte Konstruktion eignet sich somit zur Verstellung von zumindest einem Abmaß der Strömungspassage 32. Durch in ihrer Kontur abgeänderte Stopfenelemente 28 ist es möglich, nicht nur die Tiefe der Strömungspassagen 32 zu verändern, sondern auch die Breite der Strömungspassagen oder deren Länge. Auch eine Verschiebung der Stopfenelemente in Axial- und/oder Umfangsrichtung ist denkbar.

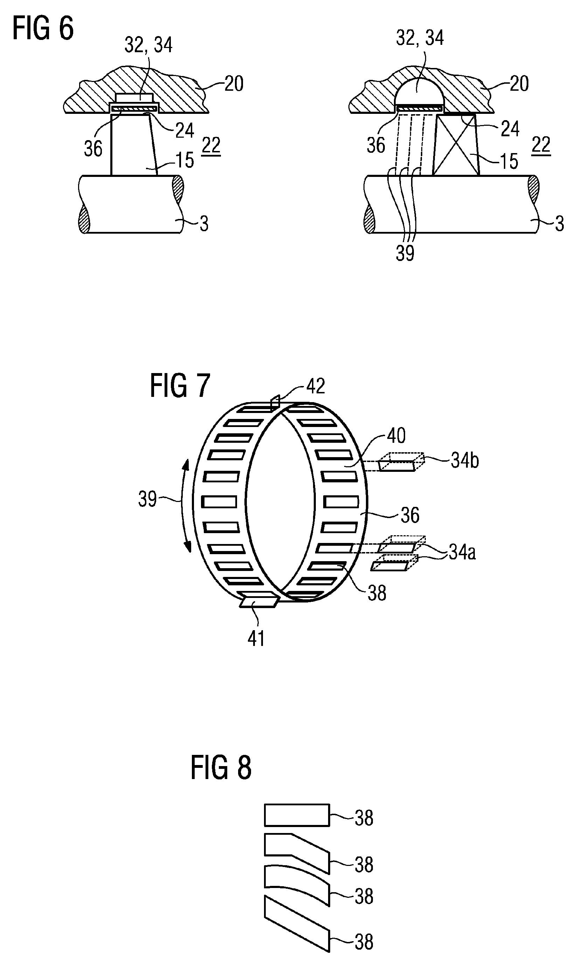

Eine zweite Ausgestaltung einer veränderbaren Strömungspassage 32 ist in FIG 6 und FIG 7 dargestellt.

Im Detail zeigt FIG 6 zwei identische Ausschnitte durch den Längsschnitt des Verdichters 5 im axialen Abschnitt von Laufschaufeln 15. Die Kanalwand 20 liegt den Spitzen 24 der Laufschaufeln 15 radialspaltbildend gegenüber. In der nach innen gewandten Fläche der Kanalwand 20 sind als Strömungspassagen 32 mehrere Nuten 34 entlang des Umfangs gleichmäßig verteilt, von denen lediglich eine dargestellt ist. Die Anzahl der Nuten 34 entspricht vorzugsweise der Anzahl der Laufschaufeln 15 im Laufschaufelkranz. Alle Nuten 34 haben im Wesentlichen eine rechteckige Kontur und damit eine dementsprechend konturierte Nutöffnung. Andere Konturen, wie sie beispielsweise in FIG 8 gezeigt sind, sind selbstverständlich auch möglich. Die axiale Länge der Nuten 34 entspricht in etwa der Länge der axialen Projektion der Spitzen 24. Zudem liegen im links gezeigten Längsschnitt der FIG 6 die Nuten 34 und die Spitzen 24 der Laufschaufeln axial einander fluchtend gegenüber, was einer Überdeckung von 100% entspricht. Abweichungen davon sind möglich, wie in FIG 6 rechts dargestellt. Hier ist in Volllinie eine Laufschaufel 15 dargestellt, deren Spitze 24 von der Nut 34 nur minimal überdeckt ist. In gestrichelter Linienart sind rechts in FIG 6 zudem drei weitere axiale Positionen von Laufschaufeln 15 schematisch gezeigt, bei denen die Nut 34 etwa 30%, 60% und 95% der axialen Projektion der Laufschaufelspitze 24 überdeckt.

Zwischen den Spitzen 24 der Laufschaufeln 15 und den Nuten 34 ist eine Abdeckung 36 vorgesehen. Die Abdeckung 36 ist in FIG 7 perspektivisch dargestellt und als Ringblech ausgebildet. In der Abdeckung 36 sind in gleicher Anzahl zu den Nuten 34 Öffnungen 38 vorgesehen. Die Öffnungen 38 weisen eine identische Kontur wie die Nutöffnungen auf. Im dargestellten Ausführungsbeispiel sind somit die Konturen der Öffnungen 38 auch rechteckig. Die Abdeckung 36 ist, wie durch den Pfeil 39 in FIG 7 angedeutet, über einen nicht weiter dargestellten Antrieb in Umfangsrichtung drehbar, so dass dessen Öffnungen 38 mit den Nutöffnungen jeweils fluchtend übereinander gelegt werden können. In FIG 7 ist dies für die Nut 34a dargestellt. Durch geringfügige Verdrehungen der Abdeckung 36 ist es möglich, die zwischen den Öffnungen 38 der Abdeckung 36 vorhandenen Stege 40 teilweise oder vollständig über die Öffnungen der Nuten 34 zu schieben, wodurch diese teilweise oder vollständig verschlossen werden. Eine derartige Positionierung von Öffnungen 38 und Nutöffnung ist durch die in FIG 7 dargestellte Nut 34b gezeigt.

Mithilfe der in Umfangsrichtung verstellbaren Abdeckung 36 sind die von den Nuten 34 gebildeten Strömungspassagen 32 veränderbar. Dabei wird in dieser zweiten Ausgestaltung die Größe der Öffnung der Strömungspassagen 32, also der Nutöffnung, durch die Positionierung der Abdeckung 36 eingestellt.

Selbstverständlich könnte die Abdeckung 36 auch an einem der Ränder jeder Öffnung 38 radial nach außen ragende Laschen 41 aufweisen, die in die Nuten 34 hineinragen. Je nach Anordnung der dieser Laschen an der Abdeckung 36 und Verschieberichtung der Abdeckung 36 ist es dann möglich, die Länge bzw. Breite der Strömungspassage 32 zu ändern: Durch eine an der Längskante der Öffnungen 38 angeordnete Lasche 41 kann die Breite der Strömungspassage 32 bei Drehung der Abdeckung 36 in Umfangsrichtung verändert werden. Mit an der Querkante der Öffnungen 38 angeordneter Lasche 42 kann bei Verschiebung der Abdeckung 36 in Axialrichtung die Länge der Strömungspassage 32 verändert werden. Um die Verschiebbarkeit der Abdeckung 36 zu gewährleisten, weist diese jedoch nur eine der beiden Laschentypen, entweder die Lasche 41 oder die Lasche 42, auf.

Durch die in den Figuren 2-8 gezeigten Ausgestaltungen ist es möglich, die zur Beeinflussung der Spaltströmung vorgesehenen Strömungspassagen 32 betriebsabhängig zu aktivieren, zu deaktivieren und in ihrer Größe anzupassen. Dadurch ist es möglich, für Betriebszustände, die keine Beeinflussung der Hauptströmung erfordern - weil schädliche Phänomene dann eher nicht auftreten -, die in der Kanalwand 20 vorhandene Strukturierung auszuschalten und für Betriebszustände, bei denen mit dem Auftreten von den eingangs genannten Phänomenen zu rechnen ist, zuerst teilweise und später gegebenenfalls vollständig zu aktivieren. Dies hat den Vorteil, dass das Casing Treatment für diejenigen Betriebszustände, in denen eine Beeinflussung der Strömung durch das Casing Treatment unerwünscht ist, auch tatsächlich vermieden werden kann. Dies führt zur Wiederherstellung des Wirkungsgrads trotz der Möglichkeit, mithilfe des Casing Treatments während gefährdeter Betriebszustände schadenbringende Phänomene zu unterdrücken.

In FIG 8 sind alternative Konturen 38a-38d für die Löcher 26 und Stopfenelemente 28 und/oder für die Nuten 34 und Öffnungen 38 dargestellt. Anstelle einer rechteckigen Kontur 38a ist auch eine prinzipiell rechteckig, jedoch mit einem Knick versehene Kontur 38b ebenso möglich wie eine bogenförmige Kontur 38c oder eine gegenüber der Maschinenachse 2 geneigte, und somit parallelogrammförmige Kontur 38d möglich. Weitere, davon abgewandelte Konturen sind ebenfalls denkbar.

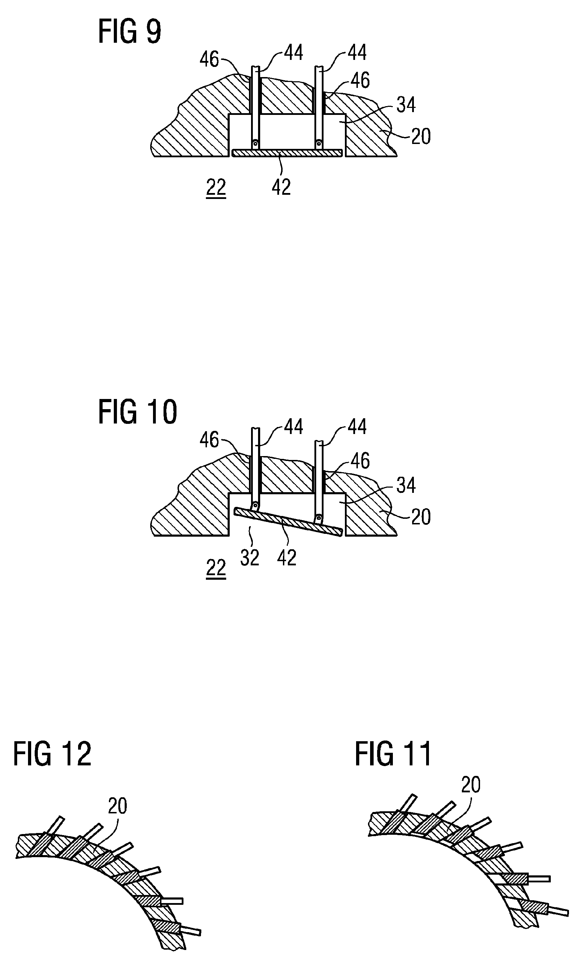

Eine weitere Ausführungsform zur Veränderung des Abmaßes der Strömungspassagen 32 ist in den Querschnittsdarstellungen FIG 9 und FIG 10 gezeigt. Die in der Kanalwand 20 angeordneten Nuten 34 sind gemäß der dargestellten Ausführungsform durch individuelle Abdeckungen 42 verschließbar. An der Rückseite der Abdeckungen 42 sind jeweils zwei Schubstangen 44 angelenkt, die unabhängig voneinander verschoben werden können. Die Schubstangen 44 erstrecken sich durch im Nutgrund der Nuten 34 angeordnete Bohrungen 46, so dass die Schubstangen 44 von außerhalb des Strömungskanals angeordneten Antrieben in nicht weiter dargestellter Weise betätigt werden können. Durch die Betätigung der Schubstange 44 kann die Abdeckung 42, wie in FIG 9 dargestellt, die Öffnung der Nut 34 vollständig verschließen, so dass die im Strömungskanal 22 zugewandte Fläche der Kanalwand 20 stufenfrei ist. Im Gegensatz dazu zeigt FIG 10 eine mögliche Positionierung der Abdeckung 42, die eine Strömungspassage 32 erzeugt. Dabei ist die in der FIG 10 links dargestellte Schubstange 44 eingerückt, wodurch ein Teil des Nutraums zur Bildung der Strömungspassagen 32 freigegeben wird. Selbstverständlich können beide Schubstangen teilweise oder auch vollständig eingerückt sein, um die Tiefe der Strömungspassage 32 anzupassen.

In FIG 11 und FIG 12 ist ein Ausschnitt der Kanalwand 20 zu unterschiedlichen Zeitpunkten des Betriebs des Verdichters 5 der Gasturbine 1 gezeigt. FIG 11 zeigt die vollständig verschlossenen Löcher 26 des Casing Treatments, so wie sie während des Betriebs der Gasturbine 1 nahe oder im Designpunkt vorgesehen ist. Im Unterschied dazu zeigt FIG 12 das Casing Treatment des Verdichters 5, wenn dieser nahe der Stabilitätsgrenze betrieben wird. In FIG 12 ist zu erkennen, dass die unterschiedlichen Stopfenelemente 28 unterschiedlich weit aus den Löchern 26 verfahren wurden und somit die Strömungspassagen 32 eines Laufschaufelrings unterschiedliche Tiefen aufweisen. Anstelle unterschiedlicher Tiefen der Strömungspassagen 32 sind auch identische Tiefen möglich. In diesem Ausführungsbeispiel des Verfahrens ist insgesamt jedoch eine periodische Verstellung der Stopfenelemente 28 nicht vorgesehen.

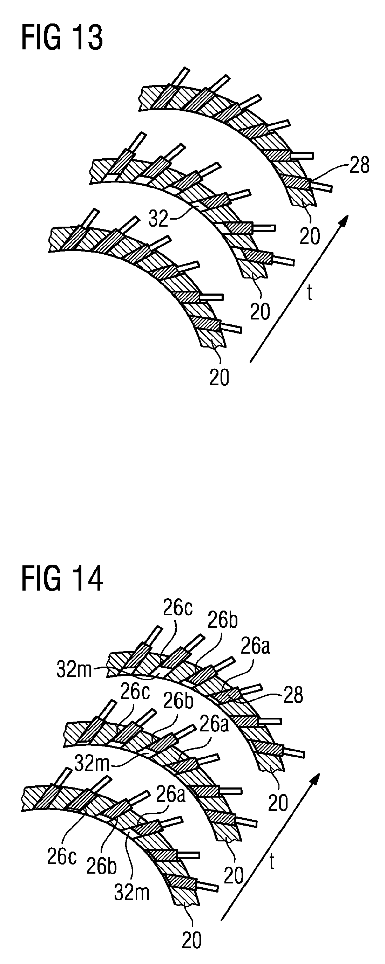

FIG 13 und FIG 14 zeigen das Casing Treatment für einen Verdichter 5, welcher in einem Bereich nahe der Stabilitätsgrenze betrieben wird. Währenddessen werden die Stopfenelemente 28 periodisch bewegt, so dass die Tiefe der Strömungspassagen 32 um einen festen oder auch variablen Wert schwingen. Die drei in FIG 13 dargestellten Abschnitte zeigen das gleiche Casing Treatment zu drei unterschiedlichen Zeitpunkten. Dieser Ausführungsform des Verfahrens nach schwingen alle Stopfenelemente synchron, so dass entweder alle Löcher 26 des Casing Treatments einer Verdichterstufe sich stets vergrößern oder verkleinern. Die Schwingungsfrequenz und die Schwingungsamplitude ist dabei abhängig von den Betriebsparametern des Verdichters 5 und/oder der Gasturbine 1. Damit lässt sich die Strömung im Verdichter 5 aktiv beeinflussen, so dass die ungewünschten Phänomene seltener auftreten als ohne aktive Beeinflussung.

Die FIG 14 zeigt ein zu FIG 13 unterschiedliches Verfahren. Auch die drei in FIG 13 dargestellten Abschnitte zeigen das Casing Treatment zu unterschiedlichen Zeitpunkten. Die Stopfenelemente 26 des Casing Treatments einer Verdichterstufe werden jedoch asynchron angesteuert. Zu einem ersten Zeitpunkt befindet sich die Strömungspassage 32m mit maximaler Tiefe kurzzeitig bei einem ersten Loch 26a. Zu einem zweiten Zeitpunkt ist die Strömungspassage 32m mit maximaler Tiefe zu einem zweiten Loch 26b "gewandert". Die Tiefe im Loch 26a ist dann verkleinert. Das zweite Loch 26b ist neben dem ersten Loch 26a angeordnet. Danach "wandert" die Strömungspassage 32m mit maximaler Tiefe zu dem nächsten Loch 26c. Dieses Verfahren wird kontinuierlich durchgeführt, so dass die Strömungspassage 32m mit maximaler Tiefe in Umfangsrichtung umläuft. Dabei ist es möglich, dass das einem Laufschaufelkranz zugeordnete Casing Treatment mehrere Strömungspassagen 32m mit maximaler Tiefe gleichzeitig umlaufen. Auch hier ist die Schwingungsperiode des Umlaufs und die Anzahl der Strömungspassagen mit maximaler Tiefe abhängig von den Betriebsparametern des Verdichters 5 und der Gasturbine 1, um das Auftreten der ungewünschten Phänomene weiter zu verzögern oder gänzlich zu vermeiden.

## Patentansprüche

1. Verfahren
zum Betreiben eines Verdichters (5) mit einem ringförmigen Strömungskanal (22), welcher sich konzentrisch entlang einer Maschinenachse (2) des Verdichters (5) erstreckt und radial außen von einer Kanalwand (20) begrenzt ist, wobei in der Kanalwand (20) Strömungspassagen (32) zur Beeinflussung der Spaltströmung zwischen Laufschaufeln (15) und der Kanalwand (20) vorgesehen sind,
**dadurch gekennzeichnet,**
**dass** in Abhängigkeit des Betriebszustands des Verdichters (5) zumindest eines der Abmaße zumindest einer der Strömungspassagen (32) und/oder die Größe der Öffnung zumindest einer der Strömungspassagen (32) verändert wird.

2. Verfahren nach Anspruch 1,
bei dem als Abmaß die Tiefe der Strömungspassage (32) verändert wird.

3. Verfahren nach Anspruch 1 oder 2,
bei dem anhand zumindest eines im Strömungskanal (22) oder stromab davon angeordneten Drucksensors ein Verdichterdruck erfasst wird, aus dem der Betriebszustand ermittelt wird.

4. Verfahren nach Anspruch 1, 2 oder 3,
bei dem anhand zumindest eines im Strömungskanal (22) oder stromab davon angeordneten Drucksensors ein Verdichterdruck erfasst und daraus eine Größe abgeleitet wird, aus der der Betriebszustand ermittelt wird.

5. Verfahren nach einem der vorangehenden Ansprüche, bei dem die Abmaßänderung und/oder die Änderung der Öffnungsgröße periodisch sind bzw. ist.

6. Verfahren nach einem der vorangehenden Ansprüche, bei dem die Größe der Änderung variiert.
